(19)

Europäisches
Patentamt
European
Patent Office
Office européen
des brevets

(11) **EP 1 581 018 B1**

(12) **EUROPEAN PATENT SPECIFICATION**

(45) Date of publication and mention
of the grant of the patent:
**03.04.2013 Bulletin 2013/14**

(51) Int Cl.:
***H04W 52/22*** *(2009.01)*

(21) Application number: **03753225.6**

(22) Date of filing: **23.09.2003**

(86) International application number:
**PCT/CN2003/000809**

(87) International publication number:
**WO 2004/060000 (15.07.2004 Gazette 2004/29)**

(54) **A prediction method of uplink received power in an uplink hybrid service**

Aussageverfahren für die Aufwärtsstrecken-empfangsleistung in einem Aufwärtsstrecken-hybriddienst

Procédé de prédiction de puissance reçue de liaison montante dans un service hybride de liaison
montante

(84) Designated Contracting States:
**AT BE BG CH CY CZ DE DK EE ES FI FR GB GR
HU IE IT LI LU MC NL PT RO SE SI SK TR**

(30) Priority: **31.12.2002 CN 02139928**

(43) Date of publication of application:
**28.09.2005 Bulletin 2005/39**

(73) Proprietor: **ZTE Corporation
518057 Shenzhen,
Guangdong (CN)**

(72) Inventors:
• **DOU, Jianwu
Nanshan Dist.,Shenzhen,Guangdong 518057
(CN)**
• **KE, Yazhu
Nanshan Dist.,Shenzhen,Guangdong 518057
(CN)**
• **HUANG, Ming
Nanshan Dist.,Shenzhen,Guangdong 518057
(CN)**

• **LU, Yihui
Nanshan Dist.,Shenzhen,Guangdong 518057
(CN)**

(74) Representative: **Bokinge, Ole et al
Awapatent AB
Junkersgatan 1
582 35 Linköping (SE)**

(56) References cited:
EP-A1- 1 071 306   WO-A1-00/74292
CN-A- 1 167 411   CN-A- 1 291 832
CN-A- 1 294 477   CN-A- 1 373 572

• KURI J ET AL: "CALL ADMISSION ON THE
UPLINK OF A CDMA SYSTEM BASED ON TOTAL
RECEIVED POWER" ICC '99. 1999 IEEE
INTERNATIONAL CONFERENCE ON
COMMUNICATIONS. CONFERENCE RECORD.
VANCOUVER, CA, JUNE 6 - 10, 1999; [IEEE
INTERNATIONAL CONFERENCE ON
COMMUNICATIONS], NEW YORK, NY : IEEE, US,
vol. 3, 6 June 1999 (1999-06-06), pages 1431-1436,
XP000903610 ISBN: 978-0-7803-5285-8

**Description**

Field of the Invention

The present invention relates to a management method for the wireless resource of an uplink mixed service of a controlling radio network controller (CRNC) in a wide-band code division multiple access (WCDMA) mobile communication system, more particularly, to a method for fast call admission control of an uplink mixed service of a WCDMA system. The present invention belongs to the domain of communication technology.

Background of the Invention

In a WCDMA (wide-band code division multiple access) system, the concept of soft capacity means that the generation of each new call will increase the interference level for all other existing calls and depress their communication quality. Therefore it is very important to controlling the access of user to network in a proper way, which is named call admission control (CAC). The CAC exists in the RRM module in a CRNC in accordance with 3GPP(3$^{rd}$ Generation Partner Project).

The aim of the fast power control of the uplink in a WCDMA system consists in: the uplink transmit power of user equipment (UE) is adjusted by the downlink transmit power control (DL TPC) bit, so that the quality factor $E_b/N_0$ of the signal received by a base station can match the quality of service (QoS) of the corresponding service. The mapping relationship between $E_b/N_0$ and QoS can be obtained by an actual measurement after simulation. Although different UEs have different distances to the base station and different transmit powers, as long as the types of service are the same, the $E_b/N_0s$ received by the base station for each UE should be maintained in nearly the same level due to the UL (Uplink) fast power control. The WCDMA system can support a mixed service with variable rates, but its service is commonly classified as different classes according to QoS, such as the session, flow, interaction and background in 3GPP, wherein the first and the second classes are real-time services, the third class is a service without sensitivity for time delay, and the forth class is a non-real time service. It is so cursory to configure the parameters of an algorithm only based on these four classes of services, especially for an algorithm with the characteristic of prediction such as admission control, etc; for instance, with respect to the service class of flow, there is a great difference between the $E_b/N_0s$ required by different data rates.

The ultimate capacity of an uplink cell of a WCDMA system is limited by the total interference level received by the cell. With respect to a WCDMA system with interference restriction, the aim of downlink admission control consists in: it is determined to admit or refuse a new user call, a new radio access bearer (RAB) and a new radio link (RL) based on the current resource condition of the system (such as under switching). The admission has to be controlled on the basis of interference and radio measurement. Making sure the system is stable, the QoSof the new call should be achieved as much as possible to avoid overload.

The paper, "A Call Admission Algorithm for Multiple Class Traffic in CDMA Systems", (IEEE VTC Fall 2000, Boston Sept.24-28, 2000, 4.7.1.5.), which is written by Keunyoung Kim, etc, introduces a method for the admission control of downlink (forward link) and uplink (reverse link) when there are several kinds of services in a cell of a CDMA system, and this method defines a power ratio between different services on the basis of the signal-to-interference ratios (SIR) corresponding to the services with different bit rates. It is determined by an equivalent user number for voice service in its uplink admission control, and the equivalent user number for voice service pointed out by this method is related to the voice service model adopted by the system, however, not suitable for WCDMA systems.

United States Patent 6,278,882 (August 21, 2001), "Call Control Method in Base Station of CDMA Mobile Radio Communication System", which is filed by Choi, etc, introduces a call control method for CDMA mobile radio communication systems, in which the uplink ultimate capacity of a voice service is obtained by a test within a predetermined period, then the threshold for new access and switching access is further calculated, and the result of admission judgment is determined on the basis of the estimation for the influence possibly applied to the system load by the call access. With respect to this invention, it does not perform the prediction for the system load of the new call access on the basis of the real system load and the QoS of the call respectively, and does not take the interference restriction into consideration as well; in addition, it does not illustrate how to operate the program rapidly and effectively in detail.

In Chinese Patent Application NO.97104491, "code division multiple access communication systems based on communication quality to control access mode" (publication number, 1173771, inventor, UEDA TETSUO), the data corresponding to the quality of the downlink signal measured by a terminal in a predetermined interval is sent to the base station as downlink signal quality data in order to control the access of the terminal in the code division multiple access communication system. The base station also measures the data corresponding to uplink signal quality in a predetermined interval and forms the uplink signal quality data. A base station control apparatus determines the communication quality of the service area of the base station from the uplink and the downlink signal quality, and sends an access restriction signal to the base station when the determined communication quality is bad, and then the base station implements engagement processing to the new calls sent to or from other mobile radio terminals, since the patent does not predict the increment of the uplink interference power of the system on the basis of the QoS of a call request, it is not suitable for WCDMA systems.

The reference "WCDMA for UMTS JOHN WILEY & SONS, LTD, 2000" written by Harri Holma, etc, introduces an uplink call admission control method which aims at single service and is based on the load factor and interference. If the new total interference level is above the threshold, a new user will not be admitted by the uplink admission control algorithm:

$$I_{total\_old} + \Delta I > I_{threshold}$$

An admission control method for uplink real-time service requires: 1. A total interference power received by a base station, which includes the interference from other users in the cell, the interference from adjacent cells and background noise; 2. A fast and effective estimation for the interference possibly applied to the call request service; 3. Determining the interference threshold for different services in consideration of various factors. The total interference power received by the base station can be measured from the base station, but it is difficult to predict the increment of cell interference power caused by new services under the condition of mixed services. It needs considering the following factors to determine the interference threshold for different services: the capability of uplink User Equipment (UE) QoS, the QoS of the services connected to the system and switching margin. In addition, the hardware resource condition of NodeB is also a factor considered by uplink admission control.

In the reference "WCDMA for UMTS JOHN WILEY & SONS, LTD, 2000" written by Harri Holma, etc, two methods are adopted to estimate $\Delta I$, one is from differential, the other is from integral. Both of the methods have considered the load curve for single service, but do not relate to a mixed service.

Furthermore, in the reference "WCDMA for UMTS JOHN WILEY & SONS, LTD, 2000" written by Harri Holma, etc, it does not illustrate how to determine the interference threshold for different services and how to calculate between the variants represented by decibel (dB) or dBm rapidly, while an incorrect operational method between these variants will reduce much efficiency of the admission control.

The paper, "Call Admission on the Uplink of a CDMA System based on Total Received Power", (IEEE, US, vol. 3, 6 June 1999, pages 1431-1436, XP000903610ISBN: 978-0-7803-5285-8), which is written by KURI J, etc, introduces admitting calls to a CDMA wireless network supporting stream and packet services over a range of transmission rates and offering possibly different grades of service.

European patent application EP 1071306 A1 (24 January 2001), "Method of predicting the received power level at a base station of a CDMA network and base station implementing the method", which is filed by ALCATEL, introduces a method of predicting a power level received by a base station assuming admission a candidate user by the base station.

In addition, the PCT patent application (PCT/CN02/00694) filed on September 28, 2002 by the same applicant as the present application introduces a method for "Prediction of Uplink Received Main Power and Admission Control in CDMA System".

Summary of the Invention

One object of the present invention is to provide a method for uplink power prediction and calling admission control for a mixed service of mobile communication systems, which is an admission control method of uplink real-time service on the basis of QoS of service, data rate and real-time interference status of system and in which the increment of interference power received by a base station after a new call access is predicted by different solutions and according to different conditions, additionally different admission thresholds for different services are adopted and the influence of base station hardware barrage is taken into consideration, so the present method can be conveniently used in a real system of 3 G RNC.

Another object of the present invention is to provide a method for uplink power prediction and calling admission control for a mixed service of a mobile communication system, which overcomes the disadvantages of the rough prediction for the increment of interference power received by a base station and large amount of calculation in the prior art, and solves the problem of the disjunction between the prior art and practical cases.

The uplink call admission control in a wide-band code division multiple access mobile communication system is an important part of the radio resource management module in CRNC. It is required that the uplink admission control method can estimate the increment of the interference power received by the base station after a new service access with accuracy, at the same time the method can not be too complicated and has practical solutions for detailed questions, in order to ensure the QoS of the original services in the system and the QoS of the new service, as well as to ensure the admission judgment to be completed rapidly.

The objects of the present invention are achieved as following:

A prediction method for the uplink received power in a <u>wide-band</u> code division multiple access system for a mixed access service, is characterized by: obtaining a current uplink received power and a service type of a call request; calculating the received power change corresponding to the current uplink received power and the service type of the call request by a discrete simple calculation and according to a pre-configuration table, wherein the pre-configuration table is obtained by scaling and pre-calculating a nonlinear power change characteristic curve; and calculating the prediction value of the uplink received power in accordance with the current uplink received power and the received power change.

A call admission control method for an uplink mixed service of a mobile communication system, which includes: obtaining the prediction value of the above-mentioned uplink received power by means of the above-mentioned prediction method; and determining whether it will admit said call service in accordance with the above-mentioned prediction value of the uplink received power.

The key point to the uplink admission control method for the mixed service in a wide-band code division multiple access mobile communication system consists in how to pre-estimate the increment of the interference power received by the base station after a new call request being accessed rapidly and efficiently, and with theoretical analysis and lots of simulation it is found that the features of the call services and the load condition of the system as well as the hardware resource of the base station, and so on should be taken into consideration synthetically to predict the increment of the interference power of the base station, furthermore, the solution for the details such as the non-linear calculation between the non-integer variables in the admission control method will also influence the efficiency of the admission control method greatly.

With the method of the present invention, the increment of the interference power received by the base station when a mixed service being accessed is predicted by means of the system load curve for single service and on the basis of the features of the mixed service system, and in this method, the influence of the factors such as the resource restriction of base station hardware, the restriction of the interference power received by the base station and the access priority are taken into synthetical consideration firstly, and the increment of the interference power received by the base station after a new call being accessed based on the features of services and the practical situation of cell load, furthermore, the solution for the details such as the non-linear calculation between the non-integer variables is pointed out, as a result, compared with the prior art, the method of the present invention can achieve the uplink admission control in a wide-band code division multiple access mobile communication system more accurately and faster to save accessing time, increase the uplink capacity of the system, and reduce the lost call rate and the drop rate, which makes the method have a real use value.

Brief Description of the Drawings

Fig.1 is a flow chart of the core method for the uplink admission control of the present invention;

Fig.2 is a flow chart of the auxiliary method for A(dBm)+B(dBm) of the present invention;

Fig.3 is a flow chart of the auxiliary method for A(dBm) - B(dBm) of the present invention;

Fig. 4 is a schematic diagram showing the result of the simulation test for the related parameters of the different service subclasses in the table 2 of the present invention, wherein the transversal axis represents user number and the longitudinal axis represents the total wide-band power received by the system.

Detailed Description of the Invention

The detailed description of the present invention will now be described with reference to the drawings and detailed practical cases.

Each one of the above-mentioned four classes of services is divided into corresponding subclasses in accordance with different data rates. The present invention is on the basis of 3GPP TS-R99 series specifications.

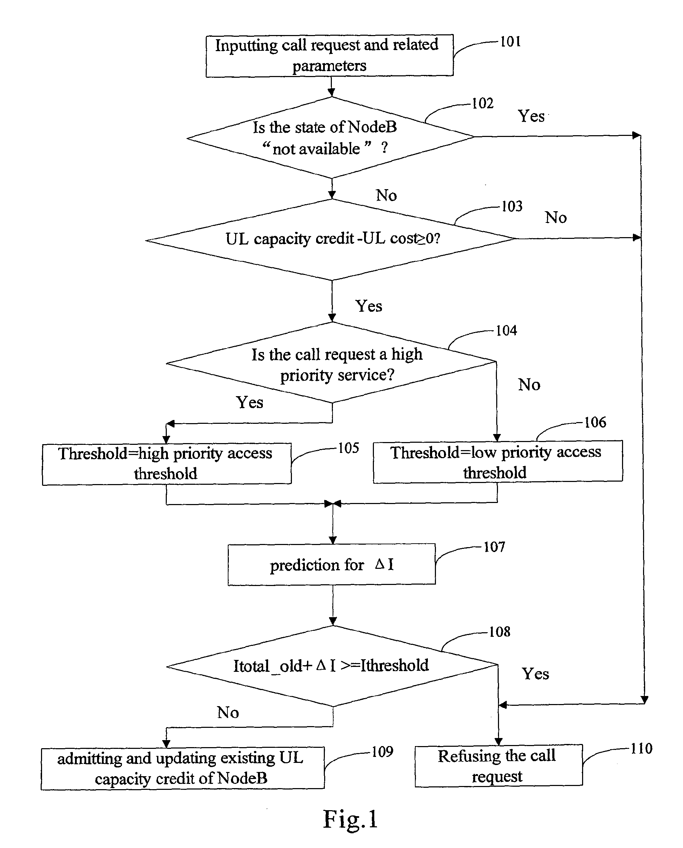

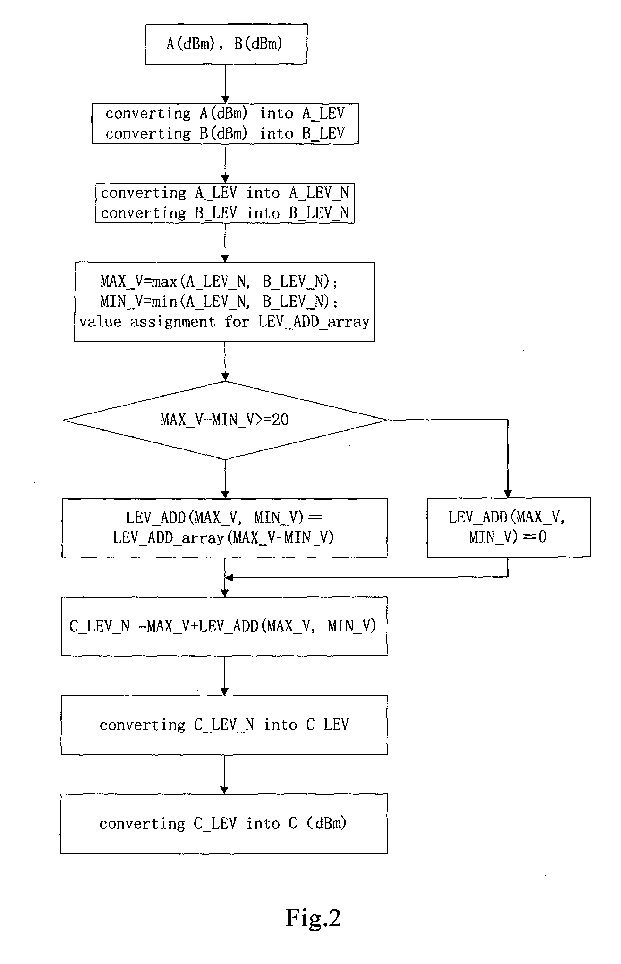

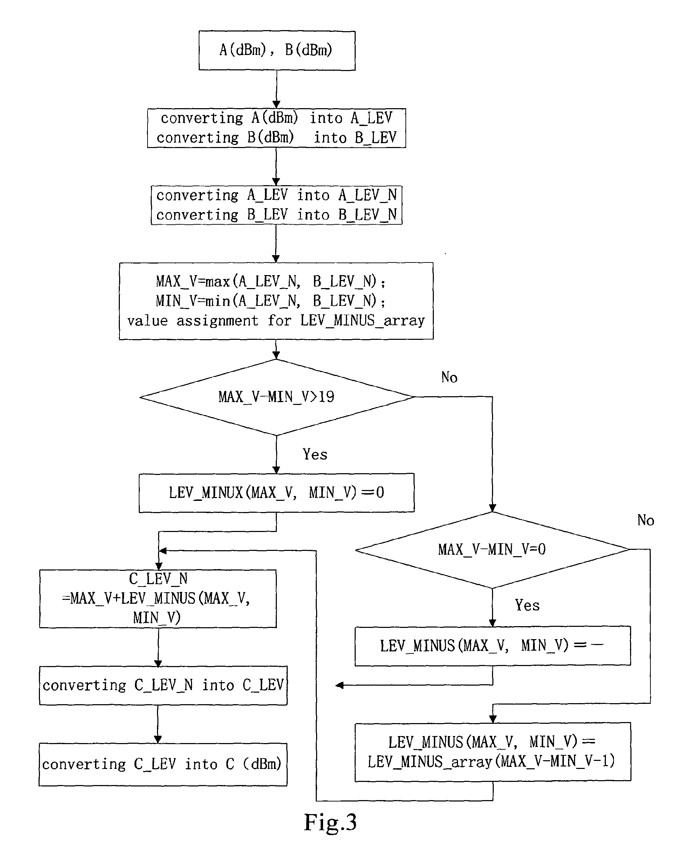

As shown in Fig 1, 2 and 3, the uplink admission control method of the present invention is as following:

The description for the pre-configuration of the related parameters of the admission control, the scaling of the non-integer variable and the auxiliary algorithm is given firstly.

Step 1: inputting call request and related parameters (<u>step 101</u>). The related parameters are input in accordance with a real-time measured value.

RTWP: the total uplink wide-band power received by the system, and $I_{total\_old}$ = RTWP.

The following parameters are pre-configured in background based on network planning, simulation and the result of route measurement.

The related parameters of each service subclass. The service can be divided into different service subclasses on the basis of QoS and the data rate of the service, the resulted service subclasses have N kinds, and N can be adjusted based on the practical situation such as the service provided by the service provider, etc. The quality factor for each service subclass can be determined based on the block error ratio (BLER) corresponding to the QoS of the corresponding service class and the data rate.

The related parameters of No. j service subclass are as following: a quality factor $jE_b/N_0$, which relates to the QoS of the corresponding service subclass and is configured when a mobile station is moving with a low speed; a voice activity factor $j_v$, which relates to the voice service; a load estimation factor $jC_L$, which relates to the service subclass,

$$^jC_L = {}^j\upsilon \cdot (1+i) \cdot \left( \frac{{}^j\beta \cdot {}^jR}{W} \right),$$

wherein i is the interference factor applied to the present cell from other cells, $j_\beta$ is the scalar value of $jE_b/N_0$, and W is the modulation chip rate;

An allowable safety coefficient of the limit user number $jD$, which is a discount value of a service subclass under the condition of mixed service on the basis of a theoretical limit user number of single service;

A high priority margin of the interference power threshold $r_h$, which is the switching margin of the high priority access interference power threshold of a service subclass under the condition of mixed service, with a maximal range of 0~1;

A low priority margin of the interference power threshold $r_n$, which is the margin of the low priority access interference power threshold of a service subclass under the condition of mixed service, with a maximal range of 0~1;

An equivalent limit user number, which is the theoretical limit user number of a service subclass under the condition of single service;

$I_{threshold\_ltd}$, which is interference threshold value corresponding to the limit user number under the condition of mixed service;

A high priority access threshold value $I_{threshold\_highpriority}$: $I_{threshold\_highpriority}$

$= I_{threshold\_ltd} \cdot r_h$;

A low priority access threshold value $I_{threshold\_lowpriority}$ : $I_{threshold\_lowpriority}$

$= I_{threshold\_ltd} \cdot r_n$;

$M_f$: a forecast revision factor, a background noise power $\tilde{N}_0$ and an interference factor applied to the present cell from other cells;

The background noise power is $\tilde{N}_0$; the interference factor applied to the present cell from other cells is i, which relates to the ratio between the load condition of the present cell and those of adjacent cells, and can be estimated by other algorithms based on the load condition of adjacent cells.

Step 2: determining NodeB hardware barrage

1. Determining whether the state of NodeB is "not available" (step 102), if it is "not available", refusing the call (step 110), otherwise going to next step (step 103);
2. Based on the dedicated channels capacity consumption law assigned by NodeB and the spread factor (SF) of the service, determining whether the following formula is true (step 103):

## UL Capacity Credit - UL cost>=0

Wherein, UL Capacity Credit represents the existing hardware resource credit of NodeB, and UL cost represents the hardware resource credit required by the present call.

If the formula is true, it will enter into a next step (step 104); otherwise it will refuse the access request (step 110).

Step 3: determining uplink interference restriction

The main aim of Step 3 is to determine whether the following formula is true:

$$I_{total\_old}+\Delta I > I_{threshold}$$

The step in detail is as following:

1. Determining $I_{threshold}$ based on the priority, if the call request is a high priority service (step 104), $I_{threshold} = I_{threshold-hghprority}$ (step 105), otherwise $I_{threshold} = I_{threshold-lowpriority}$ (step 106).

2. Predicting for $\Delta I$: Based on a lot of simulation data and theoretical analysis it has been found that when the total wideband powers received by the system are the same, whatever the actual telephone traffic of the system, the slope for this point of the interference power curve of mixed service is approximately equal to the slope for this point of the interference power curve of single service, as a result, the $\Delta I$ of mixed service can be predicted based on of the interference power curve of single service (step 107):

$$\Delta^j I = \left(\frac{I_{tatal\_old}}{1-\eta}\right)\cdot{}^j C_L$$

the formula can be converted into :

$$\Delta^j I(dBm) = \left(\frac{I_{tatal\_old}}{1-\eta}\right)(dBm) + {}^j C_L(dB) + M_f\,(\,dB\,)$$

wherein, $\eta = 1 - \tilde{N}_0 / I_{total\_old}$, ${}^j C_L$ is the load estimation factor of No. j service subclass, $M_f$ is the forecast revision factor. Supposing that

$$DltI01(dBm) = \left(\frac{I_{tatal\_old}}{1-\eta}\right)(dBm),$$

DeltI01_LEV can be determined in accordance with table 1 (DeltI01_LEV_Base table) and the scaling value of $\tilde{N}_0$ illustrated later with the following way:

DeltI01_LEV=DeltI01_LEV_Base(RTWP_LEV+N0_LEV)-N0_LEV

Table 1

| 0 | 1 | 2 | 3 | 4 | 5 | 6 | 7 | 8 | 9 | 10 | 11 |
|-----|-----|-----|-----|-----|-----|-----|-----|-----|-----|-----|-----|
| 160 | 163 | 166 | 168 | 171 | 174 | 177 | 179 | 182 | 185 | 188 | 191 |
| | | | | | | | | | | | |
| 12 | 13 | 14 | 15 | 16 | 17 | 18 | 19 | 20 | 21 | 22 | 23 |
| 194 | 197 | 201 | 204 | 207 | 210 | 214 | 217 | 221 | 225 | 228 | 232 |
| | | | | | | | | | | | |
| 24 | 25 | 26 | 27 | 28 | 29 | 30 | 31 | 32 | 33 | 34 | 35 |
| 237 | 241 | 245 | 250 | 255 | 260 | 265 | 271 | 278 | 284 | 292 | 301 |
| | | | | | | | | | | | |
| 36 | 37 | 38 | 39 | 40 | 41 | 42 | 43 | 44 | 45 | 46 | 47 |
| 311 | 324 | 340 | 363 | 413 | 414 | 368 | 347 | 334 | 325 | 317 | 312 |

(continued)

| 48 | 49 | 50 | 51 | 52 | 53 | 54 | 55 | 56 | 57 | 58 | 59 |
|-----|-----|-----|-----|-----|-----|-----|-----|-----|-----|-----|-----|
| 307 | 303 | 300 | 297 | 294 | 292 | 290 | 289 | 287 | 286 | 285 | 284 |

| 60 | 61 | 62 | 63 | 64 | 65 | 66 | 67 | 68 | 69 | 70 | 71 |
|-----|-----|-----|-----|-----|-----|-----|-----|-----|-----|-----|-----|
| 283 | 282 | 282 | 281 | 281 | 281 | 280 | 280 | 280 | 280 | 280 | 280 |

| 72 | 73 | 74 | 75 | 76 | 77 | 78 | 79 | 80 | 81 | 82 | 83 |
|-----|-----|-----|-----|-----|-----|-----|-----|-----|-----|-----|-----|
| 280 | 280 | 280 | 280 | 280 | 281 | 281 | 281 | 281 | 282 | 282 | 282 |

| 84 | 85 | 86 | 87 | 88 | 89 | 90 | 91 | 92 | 93 | 94 | 95 |
|-----|-----|-----|-----|-----|-----|-----|-----|-----|-----|-----|-----|
| 283 | 283 | 284 | 284 | 285 | 285 | 286 | 286 | 287 | 287 | 288 | 289 |

| 96 | 97 | 98 | 99 | 100 | 101 | 102 | 103 | 104 | 105 | 106 | 107 |
|-----|-----|-----|-----|-----|-----|-----|-----|-----|-----|-----|-----|
| 289 | 290 | 290 | 291 | 292 | 292 | 293 | 294 | 294 | 295 | 296 | 297 |

| 108 | 109 | 110 | 111 | 112 | 113 | 114 | 115 | 116 | 117 | 118 | 119 |
|-----|-----|-----|-----|-----|-----|-----|-----|-----|-----|-----|-----|
| 297 | 298 | 299 | 300 | 300 | 301 | 302 | 303 | 303 | 304 | 305 | 306 |

| 120 | 121 | 122 | 123 | 124 | 125 | 126 | 127 | 128 | 129 | 130 | 131 |
|-----|-----|-----|-----|-----|-----|-----|-----|-----|-----|-----|-----|
| 307 | 307 | 308 | 309 | 310 | 311 | 312 | 312 | 313 | 314 | 315 | 316 |

| 132 | 133 | 134 | 135 | 136 | 137 | 138 | 139 | 140 | 141 | 142 | 143 |
|-----|-----|-----|-----|-----|-----|-----|-----|-----|-----|-----|-----|
| 317 | 317 | 318 | 319 | 320 | 321 | 322 | 323 | 324 | 325 | 325 | 326 |

| 144 | 145 | 146 | 147 | 148 | 149 | 150 | 151 | 152 | 153 | 154 | 155 |
|-----|-----|-----|-----|-----|-----|-----|-----|-----|-----|-----|-----|
| 327 | 328 | 329 | 330 | 331 | 332 | 333 | 334 | 334 | 335 | 336 | 337 |

| 156 | 157 | 158 | 159 | 160 | 161 | 162 | 163 | 164 | 165 | 166 | 167 |
|-----|-----|-----|-----|-----|-----|-----|-----|-----|-----|-----|-----|
| 338 | 339 | 340 | 341 | 342 | 343 | 344 | 345 | 346 | 347 | 347 | 348 |

| 168 | 169 | 170 | 171 | 172 | 173 | 174 | 175 | 176 | 177 | 178 | 179 |
|-----|-----|-----|-----|-----|-----|-----|-----|-----|-----|-----|-----|
| 349 | 350 | 351 | 352 | 353 | 354 | 355 | 356 | 357 | 358 | 359 | 360 |

| 180 | 181 | 182 | 183 | 184 | 185 | 186 | 187 | 188 | 189 | 190 | 191 |
|-----|-----|-----|-----|-----|-----|-----|-----|-----|-----|-----|-----|
| 361 | 362 | 363 | 364 | 365 | 366 | 367 | 368 | 368 | 369 | 370 | 371 |

| 192 | 193 | 194 | 195 | 196 | 197 | 198 | 199 | 200 | 201 | 202 | 203 |
|-----|-----|-----|-----|-----|-----|-----|-----|-----|-----|-----|-----|
| 372 | 373 | 374 | 375 | 376 | 377 | 378 | 379 | 380 | 381 | 382 | 383 |

(continued)

| 204 | 205 | 206 | 207 | 208 | 209 | 210 | 211 | 212 | 213 | 214 | 215 |
|-----|-----|-----|-----|-----|-----|-----|-----|-----|-----|-----|-----|
| 384 | 385 | 386 | 387 | 388 | 389 | 390 | 391 | 392 | 393 | 394 | 395 |
|     |     |     |     |     |     |     |     |     |     |     |     |
| 216 | 217 | 218 | 219 | 220 | 221 | 222 | 223 | 224 | 225 | 226 | 227 |
| 396 | 397 | 398 | 399 | 400 | 401 | 402 | 403 | 404 | 405 | 406 | 407 |
|     |     |     |     |     |     |     |     |     |     |     |     |
| 228 | 229 | 230 | 231 | 232 | 233 | 234 | 235 | 236 | 237 | 238 | 239 |
| 408 | 409 | 410 | 411 | 412 | 413 | 414 | 414 | 415 | 416 | 417 | 418 |
|     |     |     |     |     |     |     |     |     |     |     |     |
| 240 | 241 | 242 | 243 | 244 | 245 | 246 | 247 | 248 | 249 | 250 | 251 |
| 419 | 420 | 421 | 422 | 423 | 424 | 425 | 426 | 427 | 428 | 429 | 430 |
|     |     |     |     |     |     |     |     |     |     |     |     |
| 252 | 253 | 254 | 255 | 256 | 257 | 258 | 259 | 260 | 261 | 262 | 263 |
| 431 | 432 | 433 | 434 | 435 | 436 | 437 | 438 | 439 | 440 | 441 | 442 |
|     |     |     |     |     |     |     |     |     |     |     |     |
| 264 | 265 | 266 | 267 | 268 | 269 | 270 | 271 | 272 | 273 | 274 | 275 |
| 443 | 444 | 445 | 446 | 447 | 448 | 449 | 450 | 451 | 452 | 453 | 454 |
|     |     |     |     |     |     |     |     |     |     |     |     |
| 276 | 277 | 278 | 279 | 280 | 281 | 282 | 283 | 284 | 285 | 286 | 287 |
| 455 | 456 | 457 | 458 | 459 | 460 | 461 | 462 | 463 | 464 | 465 | 466 |
|     |     |     |     |     |     |     |     |     |     |     |     |
| 288 | 289 | 290 | 291 | 292 | 293 | 294 | 295 | 296 | 297 | 298 | 299 |
| 467 | 468 | 469 | 470 | 471 | 472 | 473 | 474 | 475 | 476 | 477 | 478 |
|     |     |     |     |     |     |     |     |     |     |     |     |
| 300 | 301 | 302 | 303 | 304 | 305 | 306 | 307 | 308 | 309 | 310 | 311 |
| 479 | 480 | 481 | 482 | 483 | 484 | 485 | 486 | 487 | 488 | 489 | 490 |
|     |     |     |     |     |     |     |     |     |     |     |     |
| 312 | 313 | 314 | 315 | 316 | 317 | 318 | 319 | 320 | 321 | 322 | 323 |
| 491 | 492 | 493 | 494 | 495 | 496 | 497 | 498 | 499 | 500 | 501 | 502 |
|     |     |     |     |     |     |     |     |     |     |     |     |
| 324 | 325 | 326 | 327 | 328 | 329 | 330 | 331 | 332 | 333 | 334 | 335 |
| 503 | 504 | 505 | 506 | 507 | 508 | 509 | 510 | 511 | 512 | 513 | 514 |
|     |     |     |     |     |     |     |     |     |     |     |     |
| 336 | 337 | 338 | 339 | 340 | 341 | 342 | 343 | 344 | 345 | 346 | 347 |
| 515 | 516 | 517 | 518 | 519 | 520 | 521 | 522 | 523 | 524 | 525 | 526 |
|     |     |     |     |     |     |     |     |     |     |     |     |
| 348 | 349 | 350 | 351 | 352 | 353 | 354 | 355 | 356 | 357 | 358 | 359 |
| 527 | 528 | 529 | 530 | 531 | 532 | 533 | 534 | 535 | 536 | 537 | 538 |
| 360 | 361 | 362 | 363 | 364 | 365 | 366 | 367 | 368 | 369 | 370 | 371 |

(continued)

| | | | | | | | | | | | |
|---|---|---|---|---|---|---|---|---|---|---|---|
| 539 | 540 | 541 | 542 | 543 | 544 | 545 | 546 | 547 | 548 | 549 | 550 |
| 372 | 373 | 374 | 375 | 376 | 377 | 378 | 379 | 380 | 381 | 382 | 383 |
| 551 | 552 | 553 | 554 | 555 | 556 | 557 | 558 | 559 | 560 | 561 | 562 |
| 384 | 385 | 386 | 387 | 388 | 389 | 390 | 391 | 392 | 393 | 394 | 395 |
| 563 | 564 | 565 | 566 | 567 | 568 | 569 | 570 | 571 | 572 | 573 | 574 |
| 396 | 397 | 398 | 399 | 400 | 401 | 402 | 403 | 404 | 405 | 406 | 407 |
| 575 | 576 | 577 | 578 | 579 | 580 | 581 | 582 | 583 | 584 | 585 | 586 |
| 408 | 409 | 410 | 411 | 412 | 413 | 414 | 415 | 416 | 417 | 418 | 419 |
| 587 | 588 | 589 | 590 | 591 | 592 | 593 | 594 | 595 | 596 | 597 | 598 |
| 420 | 421 | 422 | 423 | 424 | 425 | 426 | 427 | 428 | 429 | 430 | 431 |
| 599 | 600 | 601 | 602 | 603 | 604 | 605 | 606 | 607 | 608 | 609 | 610 |
| 432 | 433 | 434 | 435 | 436 | 437 | 438 | 439 | 440 | 441 | 442 | 443 |
| 611 | 612 | 613 | 614 | 615 | 616 | 617 | 618 | 619 | 620 | 621 | 622 |
| 444 | 445 | 446 | 447 | 448 | 449 | 450 | 451 | 452 | 453 | 454 | 455 |
| 623 | 624 | 625 | 626 | 627 | 628 | 629 | 630 | 631 | 632 | 633 | 634 |
| 456 | 457 | 458 | 459 | 460 | 461 | 462 | 463 | 464 | 465 | 466 | 467 |
| 635 | 636 | 637 | 638 | 639 | 640 | 641 | 642 | 643 | 644 | 645 | 646 |
| 468 | 469 | 470 | 471 | 472 | 473 | 474 | 475 | 476 | 477 | 478 | 479 |
| 647 | 648 | 649 | 650 | 651 | 652 | 653 | 654 | 655 | 656 | 657 | 658 |
| 480 | 481 | 482 | 483 | 484 | 485 | 486 | 487 | 488 | 489 | 490 | 491 |
| 659 | 660 | 661 | 662 | 663 | 664 | 665 | 666 | 667 | 668 | 669 | 670 |
| 492 | 493 | 494 | 495 | 496 | 497 | 498 | 499 | 500 | 501 | 502 | 503 |
| 671 | 672 | 673 | 674 | 675 | 676 | 677 | 678 | 679 | 680 | 681 | 682 |
| 504 | 505 | 506 | 507 | 508 | 509 | 510 | 511 | 512 | 513 | 514 | 515 |
| 683 | 684 | 685 | 686 | 687 | 688 | 689 | 690 | 691 | 692 | 693 | 694 |
| 516 | 517 | 518 | 519 | 520 | 521 | 522 | 523 | 524 | 525 | 526 | 527 |

(continued)

| 695 | 696 | 697 | 698 | 699 | 700 | 701 | 702 | 703 | 704 | 705 | 706 |
|-----|-----|-----|-----|-----|-----|-----|-----|-----|-----|-----|-----|
|     |     |     |     |     |     |     |     |     |     |     |     |
| 528 | 529 | 530 | 531 | 532 | 533 | 534 | 535 | 536 | 537 | 538 | 539 |
| 707 | 708 | 709 | 710 | 711 | 712 | 713 | 714 | 715 | 716 | 717 | 718 |
|     |     |     |     |     |     |     |     |     |     |     |     |
| 540 | 541 | 542 | 543 | 544 | 545 | 546 | 547 | 548 | 549 | 550 | 551 |
| 719 | 720 | 721 | 722 | 723 | 724 | 725 | 726 | 727 | 728 | 729 | 730 |
|     |     |     |     |     |     |     |     |     |     |     |     |
| 552 | 553 | 554 | 555 | 556 | 557 | 558 | 559 | 560 | 561 | 562 | 563 |
| 731 | 732 | 733 | 734 | 735 | 736 | 737 | 738 | 739 | 740 | 741 | 742 |
|     |     |     |     |     |     |     |     |     |     |     |     |
| 564 | 565 | 566 | 567 | 568 | 569 | 570 | 571 | 572 | 573 | 574 | 575 |
| 743 | 744 | 745 | 746 | 747 | 748 | 749 | 750 | 751 | 752 | 753 | 754 |
|     |     |     |     |     |     |     |     |     |     |     |     |
| 576 | 577 | 578 | 579 | 580 | 581 | 582 | 583 | 584 | 585 | 586 | 587 |
| 755 | 756 | 757 | 758 | 759 | 760 | 761 | 762 | 763 | 764 | 765 | 766 |
|     |     |     |     |     |     |     |     |     |     |     |     |
| 588 | 589 | 590 | 591 | 592 | 593 | 594 | 595 | 596 | 597 | 598 | 599 |
| 767 | 768 | 769 | 770 | 771 | 772 | 773 | 774 | 775 | 776 | 777 | 778 |
|     |     |     |     |     |     |     |     |     |     |     |     |
| 600 | 601 | 602 | 603 | 604 | 605 | 606 | 607 | 608 | 609 | 610 | 611 |
| 779 | 780 | 781 | 782 | 783 | 784 | 785 | 786 | 787 | 788 | 789 | 790 |
|     |     |     |     |     |     |     |     |     |     |     |     |
|     | 612 | 613 | 614 | 615 | 616 | 617 | 618 | 619 | 620 | 621 |     |
|     | 791 | 792 | 793 | 794 | 795 | 796 | 797 | 798 | 799 | 800 |     |

3. Determination for uplink admission control. If $I_{total\_old}+\Delta jJ>=I_{threshold}$ (step 108), refusing the call request (step 110), otherwise going to next step(step 109).

The implement of the above-mentioned prediction for $\Delta I$ and determination for uplink admission control can be divided into several parts as following in a RNC system:

Scaling for non-integer variable

□ Scaling for RTWP, and RTWP is the total wide-band power received by the base station.
If RTWP < -112.0, RTWP_LEV = 0,
If -50.0 ≤ RTWP, RTWP_LEV = 621,
If - 112.0 ≤ RTWP <-50.0,
RTWP _LEV=floor ((RTWP - (-112.0))/0.1+1),
Wherein, floor(●) represents lower limit rounding.

□ Scaling for DeltI01
If DeltI01 < -130.0, DeltI01_LEV = 0,
If -50.0 ≤ DeltI01, DeltI01_LEV = 800,
If -130.0 ≤ $jC$ < -50.0,
DeltI01_LEV=floor ((DeltI01- (-130.0))/0.1+1),

Wherein, floor(●) represents lower limit rounding.

□ Scaling for $\tilde{N}_0$

If $\tilde{N}_0 < -108.0$, N0_LEV = 0,

If $-97.0 \leq \tilde{N}_0$, N0_LEV = 111,

If $-108.0 \leq \tilde{N}_0 < -97.0$,

N0_LEV = floor $((\tilde{N}_0 - (-108.0))/0.1+1)$,

Wherein, floor(●) represents lower limit rounding.

□ composing the DeltI01_LEV_Base table on the basis of $\tilde{N}_0 = -108$dBm,

the data in the odd lines of table 1 are the scaling values of $\tilde{N}_0$ ( $0 \sim 621$ ) : N0_LEV, and the data in the odd lines of table 1 are the corresponding values of DeltI01_LEV_Base ( $160 \sim 800$), the data in the table are calculated with the following way:

$$\text{DltI01}(\boldsymbol{dBm}) = \left(\frac{I_{tatal\_old}}{1-\eta}\right)(dBm),$$

Wherein, $\eta = 1 - \tilde{N}_0 / I_{total\_old}$;

$\tilde{N}_0$: background noise power;

$\mathbf{I}_{total}$: total wide-band power received by base station;

It can be noticed that DeltI01 is a duality function. The relationship between DeltI01 and $\mathbf{I}_{total}$ can be obtained by fixing $\tilde{N}_0 = -108$dBm, and then the DeltI01_LEV_Base table can be obtained by respectively scaling the two variables of this relationship, DeltI01 and $\mathbf{I_{total}}$, and representing $\mathbf{I_{total}}$ and DeltI01 in the form of table as the independent variable and the dependent variable respectively, so that the DeltI01 corresponding to an arbitrary value of N0 can be obtained through a derivation on the basis of this table :

DeltI01_LEV=DeltI01_LEV_Base(RTWP_LEV+N0_LEV) - N0_LEV

□ Scaling for load estimation factor $j\boldsymbol{C}_L$

If $j\boldsymbol{C}_L < -130.0$, CjL_LEV = 0,

If $\mathbf{-50.0} \leq {}^{j}\boldsymbol{C}_L$, CjL_LEV = 800,

If $-130.0 \leq {}^{j}C_L < -50.0$, CjL_LEV = floor $(({}^{j}\boldsymbol{C}_L - (-130.0))/0.1+1)$,

Wherein, floor(●) represents lower limit rounding.

□ Scaling for ${}^{j}\mathbf{I}_{\textbf{threshold-lowpriority}}$

If ${}^{j}\mathbf{I}_{\textbf{threshold-lowpriorit}} < -130.0$,

Ij_THRESHOLD_LOWP_LEV = 0,

If $-50.0 \leq {}^{j}\mathbf{I}_{\textbf{threshold-lowpriorit}}$,

Ij_THRESHOLD_LOWP_LEV = 800,

If $-130.0 \leq {}^{j}\mathbf{I}_{\textbf{threshold-lowpriorit}} < -50.0$,

Ij_THRESHOLD LOWP LEV = floor $(({}^{j}\mathbf{I}_{\textbf{threshold-lowpriorit}} - (-130.0))/0.1+1)$,

Wherein, floor(●) represents lower limit rounding.

□ Scaling for ${}^{j}\mathbf{I}_{\textbf{threshold-highpriority}}$

If ${}^{j}\mathbf{I}_{\textbf{threshold-lowpliorit}} < --130.0$,

Ij_THRESHOLD_HIGH_LEV = 0,

If $-50.0 \leq {}^{j}\mathbf{I}_{\textbf{threshold-lowpriorit}}$,

Ij_THRESHOLD_HIGH_LEV = 800,

If $-130.0 \leq {}^{j}\mathbf{I}_{\textbf{threshold-hithpriorit}} < -50.0$,

Ij_THRESHOLD_HIGH_LEV= floor $(({}^{j}\mathbf{I}_{\textbf{threshold-highpriorit}} - (-130.0))/0.1+1)$

Wherein, floor(●) represents lower limit rounding.

□ Scaling for $\boldsymbol{M_f}$

If $\boldsymbol{M_f} < -10.0$,

$\mathbf{M_f}$_LEV = 0,

If $10.0 \leq M_f$,
$M_f = 200$,
If $-10.0 \leq M_f < 10.0$,
$M_f\_LEV = \text{floor}((M_f-(-10.0))/0.1+1)$,
Wherein, floor($\bullet$) represents lower limit rounding.

(2) Auxiliary algorithm

The aim of the auxiliary algorithm is to improve the operation efficiency of summing (or differencing) the variables in dBm (or dB) by the system. The algorithm in detail is as following:

<1> Since the variables (with dimensions or without dimensions) have different scales adopted in scaling, a public nominal large enough to cover all possible ranges is defined firstly. The public nominal of physical quantity x is given as following:

If x< -160.0,
X_LEV_N=0,

$$\text{otherwise } X\_LEV\_N = \text{floor}((x-(-160.0))/0.1+1),$$

Wherein, floor($\bullet$) represents lower limit rounding.

The relationship between X_LEV_N and X_LEV is as following:

$$X\_LEV\_N = X\_LEV \times (step/step\_n) + (floor\_x - floor\_x\_n)/step\_n;$$

Wherein, "step" is the scaling step length for X_LEV, step_n is the scaling step length for X_LEV_N, and floor_x is the upper limit of x corresponding to X_LEV_000, for example, if the "step" corresponding to N0_LEV_000 is 0.1, step_n is 0.1, floor_$\tilde{N}_0$ is -108, and floor_x_n is -160, N0_LEV_020 is equivalent to N0_LEV_N_540, that is because of:

$$540 = 20 + [-108 - (-160)] \times 10 \text{。}$$

The scaled variable can be operated after it has been converted into a scaling value under the public nominal.
<2> supposing two power values of A(dBm) and B(dBm) to calculate C(dBm)=A(dBm)+B(dBm).
The calculation can be performed as following:

i. scaling A(dBm) with above-mentioned scaling rules: A_LEV, scaling B(dBm) with above-mentioned scaling rules: B_LEV;
ii. converting A_LEV into A_LEV_N and B_LEV into B_LEV_N;
iii. calculating C_LEV_N with following formula:

$$C\_LEV\_N = \max(A\_LEV\_N, B\_LEV\_N)$$
$$+ LEV\_ADD(\max(A\_LEV\_N, B\_LEV\_N)$$
$$- \min(A\_LEV\_N, B\_LEV\_N))$$

Wherein, LEV_ADD(.) is calculated as following:
If max(A_LEV_N, B_LEV_N) - min(A_LEV_N, B_LEV_N)>=194, LEV_ADD(max(A_LEV_N, B_LEV_N) - min(A_LEV_N, B_LEV _N)) = 0;
If max(A_LEV_N, B_EV_N) - min(A_LEV_N, B_LEV_N)<194,
LEV_ADD(max(A_LEV_N, B_LEV_N) - min(A_LEV_N, B_LEV_N)) is:
the element of the coordinates corresponding to LEV_ADD_array, and LEV_ADD_array is a known one-dimensional array (194×1), which can be generated as following:

> a. setting COUNTER=0;
> b. calculating r=10*log10(1+10^(-COUNTER/10/10));
> c. if r>0.5,
> LEV_ADD_array(COUNTER)=ceil(r/0.1);
> COUNTER is added by 1;
> going to b.
> otherwise ending the calculation and outputting LEV_ADD_array; wherein, ceil(•) represents upper limit rounding;

> iv. converting C_LEV_N into C_LEV;
> v. converting C_LEV into C(dBm).

<3> supposing two power values of A(dBm) and B(dBm) (A>B) to calculate C(dBm)=A(dBm) - B(dBm); and the calculation can be performed as following:

> i. scaling A(dBm) with above-mentioned scaling rules: A_LEV, scaling B(dBm) with above-mentioned scaling rules: B_LEV;
> ii. converting A_LEV into A_LEV_N and B_LEV into B_LEV_N;
> iii. calculating C_LEV_N with following formula:

$$C\_LEV\_N = max(\overline{A\_LEV\_N}, \overline{B\_LEV\_N}) + LEV\_MINUS(max(\overline{A\_LEV\_N}, \overline{B\_LEV\_N}) - min(A\_LEV\_N, B\_LEV\_N) -1)$$

> wherein, LEV_MINUS(.)is calculated as following:
> If max(A_LEV_N, B_LEV_N) -min(A_LEV_N, B_LEV_N)>194,
> LEV_MINUS(max(A_LEV_N, B_LEV_N) -min(A_LEV_N, B_LEV_N) -1) = 0;
> If max(A_LEV_N, B_LEV_N) - min(A_LEV_N, B_LEV_N) = 0,
> LEV_MINUS(max(A_LEV_N, B_LEV_N) -min(A_LEV_N, B_LEV_N) -1)= - ∞;
> If max(A_LEV_N,B_LEV_N) - min(A_LEV_N, B_LEV_N)>=1 and
> max(A_LEV_N, B_LEV_N) - min(A_LEV_N, B_LEV_N)<=194,
> LEV_MINUS(max(A_LEV_N, B_LEV_N) - min(A_LEV_N, B_LEV_N) -1) is the element of the coordinates corresponding to the one-dimensional LEV_ADD_array, and LEV_MINUS_array is a known one-dimensional array (194×1), which can be generated as following:

> a. setting COUNTER=1;
> b. calculating r=10*log10(1-10^(-COUNTER/10/10))
> c. If abs(r)>0.5
> LEV_MINUS_array(COUNTER)=floor(r/0.1);
> COUNTER is added by 1;

> going to b;
> otherwise ending the calculation and outputting LEV_MINUS array;
> iv. converting C_LEV_N into C_LEV;
> v. converting C_LEV into C(dBm);

> wherein, abs(r) represents to calculate the absolute value for r, floor(•) represents lower limit rounding;

Step 4: updating the existing UL Capacity Credit of NodeB:

If the call request is admitted,
UL Capacity Credit = UL Capacity Credit - UL cost;
otherwise the existing UL Capacity Credit of NodeB will not be updated.
All the parameters used in above case are configured under a simulation environment, and those of an actual system should be configured based on the specific characteristics of base station equipments.

1. Construction of a radio simulation environment and configuration of corresponding parameters.

The radio environment and the corresponding parameters of a cell now will be configured in order to illustrate the method of the present invention more detailedly.

It supposes that the planning radius of the cell is 2km, and then the propagation model of radio signals in the cell is:

Outdoor propagation model:

$$L_{b城} = 46.3 + 33.9 \lg f - 13.82 \lg h_b + (44.9 - 6.55 \lg h_b)(\lg d)$$

The applicable conditions of the model consist in that: carrier frequency is in the range of 150MHz~2000MHz, the effective height of the base station antenna $h_b$ is in the range of 30~200 m, the height of the mobile station antenna is in the range of 1~10 m, the communication distance d is in the range of 1~20 km, and the height of the mobile station is 1.5m.

The specific meaning of each parameter consists in that:

$h_b$, $h_m$-the effective heights of the base station antenna and the mobile station antenna, whose unit is meter, and the unit of d is kilometer.

Supposing that the height from the antenna of the base station to the ground is $h_s$, the altitude of the base station ground is $h_g$, the height from the antenna of the mobile station to the ground is $h_m$, the altitude of the ground where the mobile station located is $h_{mg}$, thus the effective height of the base station antenna can be calculated by $h_b = h_s + h_g - h_{mg}$; and the effective height of the mobile station antenna is $h_m$.

The parameters adopted in the calculation are that $h_b$=30m, f=1950Hz.

2. Parameter configuration

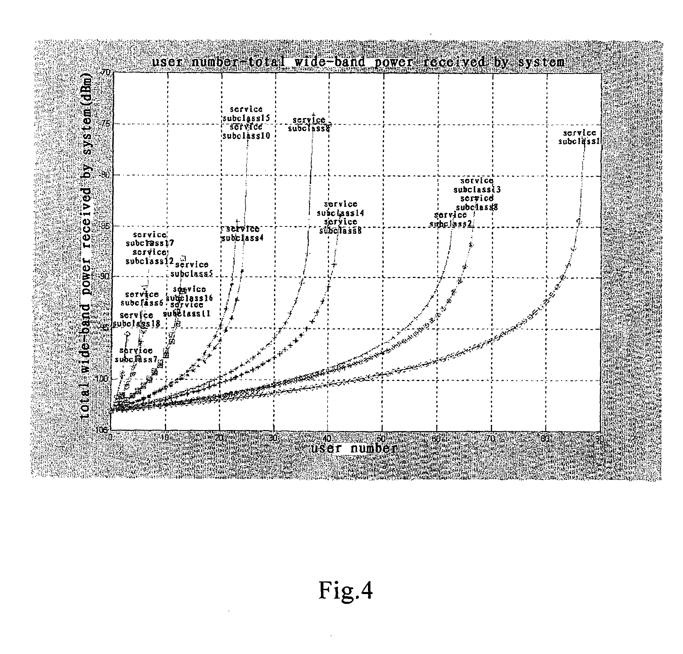

The related parameters of different service subclasses are shown in table 2, wherein the parameters in the rows of 2-5, 7~9 are pre-configured and the parameters in the rows of 6, 11~13 are determined by the pre-configured parameters through simulation, and the result of the simulation is shown in Fig.4.

## Table 2

| Service classes | Service subclass number j | Service data rate $^jR$ | Quality factor $^jE_b/N_0$ | Voice activity factor $^jU$ | Load estimation factor $^jC_L$ | allowable safety coefficient of limit user number $^jD$ | high priority margin of interference power threshold $r_H$ | low priority margin of interference power threshold $r_n$ | equivalent limit user number | $I_{threshold\_ltd}$ | high priority access threshold value $I_{threshold\_highpriority}$ | low priority access threshold value $I_{threshold\_lowpriority}$ | $M_f$ forecast revision factor |
|---|---|---|---|---|---|---|---|---|---|---|---|---|---|
| | - | kbps | B | - | dB | - | - | - | - | dBm | dBm | dBm | dB |
| Session | 1 | 7.95 | 5.5 | 63 | -21.7929 | 1 | 0.9 | 0.6 | 88 | -76.2268 | -76.6844 | -78.4453 | 0 |
| | 2 | 12.2 | 5 | 63 | -20.4329 | 1 | 0.9 | 0.6 | 64 | -83.7827 | -84.2403 | -86.0012 | 0 |
| Flow | 3 | 16 | 5.1 | 1 | -17.1488 | 1 | 0.9 | 0.6 | 38 | -74.1209 | -74.5785 | -76.3394 | 0 |
| | 4 | 32 | 4.1 | 1 | -15.1385 | 1 | 0.9 | 0.6 | 24 | -84.4999 | -84.9575 | -86.7184 | 0 |
| | 5 | 64 | 3.7 | 1 | -12.5282 | 1 | 0.9 | 0.6 | 14 | -88.1271 | -88.5847 | -90.3456 | 0 |
| | 6 | 144 | 3.4 | 1 | -9.3063 | 1 | 0.9 | 0.6 | 7 | -91.0192 | -91.4768 | -93.2377 | 0 |
| | 7 | 384 | 2.3 | 1 | -6.1466 | 1 | 0.9 | 0.6 | 4 | -95.5472 | -96.0048 | -97.7657 | 0 |
| Interaction | 8 | 8 | 4.1 | 1 | -21.1591 | 1 | 0.9 | 0.6 | 68 | -82.2084 | -82.6660 | -84.4269 | 0 |
| | 9 | 16 | 3.1 | 1 | -19.1488 | 1 | 0.9 | 0.6 | 43 | -83.9879 | -84.4455 | -86.2064 | 0 |
| | 10 | 32 | 2.7 | 1 | -16.5385 | 1 | 0.9 | 0.6 | 26 | -74.7649 | -75.2225 | -76.9834 | 0 |
| | 11 | 64 | 2.4 | 1 | -13.8282 | 1 | 0.9 | 0.6 | 14 | -91.3767 | -91.8343 | -93.5952 | 0 |
| | 12 | 144 | 2.3 | 1 | -10.4063 | 1 | 0.9 | 0.6 | 8 | -86.6622 | -87.1198 | -88.8807 | 0 |
| Background | 13 | 8 | 4.1 | 1 | -21.1591 | 1 | 0.9 | 0.6 | 68 | -82.2084 | -82.6660 | -84.4269 | 0 |
| | 14 | 16 | 3.1 | 1 | -19.1488 | 1 | 0.9 | 0.6 | 43 | -83.9879 | -84.4455 | -86.2064 | 0 |
| | 15 | 32 | 2.7 | 1 | -16.5385 | 1 | 0.9 | 0.6 | 26 | -74.7649 | -75.2225 | -76.9834 | 0 |
| | 16 | 64 | 2.4 | 1 | -13.8282 | 1 | 0.9 | 0.6 | 14 | -91.3767 | -91.8343 | -93.5952 | 0 |
| | 17 | 144 | 2.3 | 1 | -10.4063 | 1 | 0.9 | 0.6 | 8 | -86.6622 | -87.1198 | -88.8807 | 0 |
| | 18 | 384 | 2.2 | 1 | -6.2466 | 1 | 0.9 | 0.6 | 4 | -94.7669 | -95.2245 | -96.9854 | 0 |

The background noise power $\tilde{N}_0$ and the interference factor applied to the present cell from adjacent cells are shown in table 3.

Table 3

| | $\tilde{N}_0$ | interference factor of adjacent cells i |
|---|---|---|
| values | -103.1339dBm | 0.43 |

3. Initial service state and related parameters of actual measurement in the cell

The current service state of the mobile station in the cell is shown in table 4.

Table 4

| mobile station number | service subclass number | moving speed |
|---|---|---|
| 1 | 1 | 3km/h |
| 2 | 1 | 3km/h |
| 3 | 1 | 3km/h |

(continued)

| mobile station number | service subclass number | moving speed |
|---|---|---|
| 4 | 1 | 3kmm |
| 5 | 1 | 3km/h |
| 6 | 1 | 3km/h |
| 7 | 1 | 3km/h |
| 8 | 1 | 3km/h |
| 9 | 1 | 3km/h |
| 10 | 1 | 3km/h |
| 11 | 2 | 3km/h |
| 12 | 2 | 3km/h |
| 13 | 3 | 3km/h |
| 14 | 3 | 3km/h |
| 15 | 4 | 3km/h |
| 16 | 4 | 3km/h |
| 17 | 5 | 3km/h |
| 18 | 5 | 3km/h |
| 19 | 5 | 3km/h |
| 20 | 7 | 3km/h |
| 20 | 7 | 3km/h |

The total interference power received by the base station (RTWP) can be measured in an actual system, and reported to RNC (radio network controller) by NodeB (node B - base station), RTWP is calculated by a simulation algorithm in the present embodiment: RTWP= -94.1536 dBm.

The service of a new call request is the service subclass of number 6, which is in the form of walking and with high priority.

4. Implementation of downlink admission control method

Step 1: determining for NodeB hardware barrage

Supposing that the hardware resource of NodeB is enough and no hardware barrage in this simulation system, hereby going to next step;

Step2: determining for uplink interference restriction

<1> determining $I_{thmshold}$ based on priority

Since call request is a high priority service, $I_{threshold}$ = -91.4768dBm.

<2> predicting $\Delta I$

$DItI01 * {}^6C_L$ =-103.4599 dBm

<3>determining the uplink admission control

Since $RTWP + \Delta I$ = -93.67181dBm< $I_{threshold}$ = -91.4768dBm, the admission can be performed, then going to next step.

Step3: updating the existing UL capacity credit of NodeB

The UL capacity credit is updated based on the consumption law of NodeB and the SF of No.6 service subclass.

The whole downlink admission control flow is ended so far.

The key point to the uplink mixed service admission control is to estimate the increment of the interference power possibly applied to a system by a new call request rapidly and accurately. The present method predicts the increment of the total interference power received by a base station caused by a new call request, by means of a single service load curve on the basis of the actual conditions of different subclasses and system load and the conditions such as NodeB hardware resource barrage, etc, also a solution for non-linear variable real-time operation is provided in this method.

**Claims**

1. A prediction method for an uplink received power in a wide-band code division multiple access system with a mixed service access, the prediction method being **characterized in** comprising:

    obtaining a current uplink received power and a service type of a call request;
    calculating the received power change corresponding to said current uplink received power and said service type of the call request by a discrete simple calculation with a pre-configuration table, wherein said pre-configuration table is obtained by scaling and pre-calculating a non-linear power change characteristic curve; and
    calculating the predicted value of the uplink received power in accordance with said current uplink received power and said received power change.

2. The prediction method for an uplink received power according to claim 1 wherein the relationship between the uplink received power scaled under the condition of single service and the received power change is recorded in said pre-configuration table;
    said step for calculating the value of the received power change, comprises:

    scaling the current uplink received power;
    looking up the received power change under the condition of single service corresponding to the current uplink received power in said pre-configuration table; and
    calculating the predicted received power change according to said service type of the call request.

3. The prediction method for an uplink received power according to claim 2 wherein the step for calculating the predicted value of an uplink received power comprises:

    converting said current uplink received power and said received power change into a scaling value under a public nominal; and
    calculating the predicted value of the uplink received power by a discrete simple calculation in accordance with a pre-configured array, wherein said pre-configured array is obtained by scaling and pre-calculating the result of adding possible non-linear powers.

4. The prediction method for an uplink received power according to claim 2 wherein the step of calculating the predicted received power change based on said service type of the call request comprises:

    calculating said predicted received power change, based on said received power change under the condition of single service corresponding to the current uplink received power and said load estimation factor corresponding to the service type of the call request;
    wherein, said load estimation factor is calculated in advance in accordance with the QoS index of each service type and the characteristics of radio environment.

5. The prediction method for an uplink received power according to claim 4 wherein said QoS index of the service type includes a voice activity factor, a performance to noise ratio and a service data rate, and said characteristics of radio environment includes an adjacent cell interference factor.

6. The prediction method for an uplink received power according to claim 1-5 wherein said service type is a type subdivided from the four types of session, flow, interaction and background.

7. A call admission control method for an uplink mixed service of a mobile communication system, comprising:

   obtaining a predicted value of said uplink received power by means of the prediction method of claim 1-6 (107); and

   determining whether to admit said call service based on said predicted value of the uplink received power (108).

8. The admission control method of claim 7, wherein, said method further comprises:

   determining whether the state of NodeB is "not available" before obtaining said predicted value of the uplink received power (102), and if the answer is true, refusing said call request (110).

9. The admission control method of claim 7 wherein said method further comprises:

   determining whether the current residual UL capacity credit of NodeB is less than the UL cost required "not available" before obtaining said predicted value of the uplink received power (103), and if the answer is true, refusing said call request 110 ; and
   if said call request is admitted, updating said residual UL capacity credit (109).

10. The admission control method of claim 7 wherein the step for determining whether to admit said call service comprises:

    comparing said predicted value of the uplink received power and a pre-determined threshold (108), if said predicted value of the uplink received power is less than said pre-determined threshold, admitting said call request (09), otherwise refusing said call request(110).

11. The admission control method of claim 10 wherein said pre-determined thresholds are set for each service type respectively(105, 106), and the step of determining whether to admit said call service comprises:

    comparing said predicted value of the uplink received power and a pre-determined threshold, if said predicted value of the uplink received power is less than said pre-determined threshold, admitting said call request(109), otherwise refusing said call request (110).

12. The admission control method of claim 10 wherein a high priority pre-determined threshold and a low priority pre-determined threshold are set for a cut-in call and an access call respectively(105, 106), and said step for determining whether to admit said call service comprises:

    if the call request is a cut-in call, determining whether said predicted value of the uplink received power is less than said high priority pre-determined threshold, if the call request is an access call, determining whether said predicted value of the uplink received power is less than said low priority pre-determined threshold; and if the answer is true, admitting said call request(109), otherwise refusing the call request (110).

13. The admission control method of claim 10 wherein said pre-determined thresholds are set for each service type respectively, and a high priority pre-determined threshold and a low priority pre-determined threshold are respectively set for a cut-in call and an access call concerning each service type (105, 106), said step for determining whether to admit said call service comprises:

    if the call request is a cut-in call, determining whether said predicted value of the uplink received power is less than the high priority pre-determined threshold corresponding to the service type of the call request, if the call request is an access call, determining whether said predicted value of the uplink received power is less than the low priority pre-determined threshold corresponding to the service type of the call request; and if the answer is true, admitting said call request (109), otherwise refusing the call request (109).


**Patentansprüche**

1. Vorhersageverfahren für eine Aufwärtsstreckenempfangsleistung in einem Breitband-Codemultiplexzugriffssystem mit einem Mischdienstzugriff, wobei das Vorhersageverfahren **dadurch gekennzeichnet ist, dass** es aufweist:

   Erhalten einer aktuellen Aufwärtsstreckenempfangsleistung und eines Diensttyps einer Verbindungsanforderung;

Berechnen der Empfangsleistungsänderung, die der aktuellen Aufwärtsstreckenempfangsleistung und dem Diensttyp der Verbindungsanforderung entspricht, durch eine diskrete einfache Berechnung mit einer Vorkonfigurationstabelle, wobei die Vorkonfigurationstabelle durch Skalieren und Vorausberechnen einer nichtlinearen Leistungsänderungskennlinie erhalten wird; und

Berechnen des vorhergesagten Werts der Aufwärtsstreckenempfangsleistung gemäß der aktuellen Aufwärtsstreckenempfangsleistung und der Empfangsleistungsänderung.

2. Vorhersageverfahren für eine Aufwärtsstreckenempfangsleistung nach Anspruch 1, wobei die Beziehung zwischen der unter der Bedingung eines Einzeldienstes skalierten Aufwärtsstreckenempfangsleistung und der Empfangsleistungsänderung in der Vorkonfigurationstabelle aufgezeichnet wird;

wobei der Schritt des Berechnens des Wertes der Empfangsleistungsänderung aufweist:

Skalieren der aktuellen Aufwärtsstreckenempfangsleistung;

Nachschlagen der Empfangsleistungsänderung unter der Einzeldienstbedingung, die der aktuellen Aufwärtsstreckenempfangsleistung entspricht, in der Vorkonfigurationstabelle; und

Berechnen der vorhergesagten Empfangsleistungsänderung gemäß dem Diensttyp der Verbindungsanforderung.

3. Vorhersageverfahren für eine Aufwärtsstreckenempfangsleistung nach Anspruch 2, wobei der Schritt zum Berechnen des vorhergesagten Werts einer Aufwärtsstreckenempfangsleistung aufweist:

Umwandeln der aktuellen Aufwärtsstreckenempfangsleistung und der Empfangsleistungsänderung in einen Skalierungswert gemäß einem öffentlichen Nominalwert; und

Berechnen des vorhergesagten Werts der Aufwärtsstreckenempfangsleistung durch eine diskrete einfache Berechnung gemäß einem vorkonfigurierte Array, wobei das vorkonfigurierte Array durch Skalieren und Vorausberechnen des Ergebnisses des Addierens von möglichen nichtlinearen Leistungen erhalten wird.

4. Vorhersageverfahren für eine Aufwärtsstreckenempfangsleistung nach Anspruch 2, wobei der Schritt des Berechnens der vorhergesagten Empfangsleistungsänderung basierend auf dem Diensttyp der Verbindungsanforderung aufweist:

Berechnen der vorhergesagten Empfangsleistungsänderung basierend auf der Empfangsleistungsänderung unter der Einzeldienstbedingung, die der aktuellen Aufwärtsstreckenempfangsleistung entspricht, und dem Lastschätzungsfaktor, der dem Diensttyp der Verbindungsanforderung entspricht;

wobei der Lastschätzungsfaktor gemäß dem QoS-Index jedes Diensttyps und den Charakteristiken der Funkumgebung im Voraus berechnet wird.

5. Vorhersageverfahren für eine Aufwärtsstreckenempfangsleistung nach Anspruch 4, wobei der QoS-Index des Diensttyps einen Sprachaktivitätsfaktor, ein Leistungs-RauschVerhältnis und eine Dienstdatenrate beinhaltet, und die Charakteristiken der Funkumgebung einen Nachbarzellinterferenzfaktor umfassen.

6. Vorhersageverfahren für eine Aufwärtsstreckenempfangsleistung nach einem der Ansprüche 1 bis 5, wobei der Diensttyp ein Typ ausgegliedert aus den vier Typen von Sitzung, Fluss, Interaktion und Hintergrund ist.

7. Verbindungszulassungssteuerungsverfahren für einen Aufwärtsstreckenmischdienst eines Mobilkommunikationssystems, aufweisend:

Erhalten eines vorhergesagten Werts der Aufwärtsstreckenempfangsleistung durch das Vorhersageverfahren nach einem der Ansprüche 1 bis 6 (107); und

Bestimmen basierend auf dem vorhergesagten Wert der Aufwärtsstreckenempfangsleistung (108), ob der Verbindungsdienst zugelassen werden soll.

8. Zulassungssteuerungsverfahren nach Anspruch 7, wobei das Verfahren ferner aufweist:

Bestimmen vor dem Erhalten des vorhergesagten Werts der Aufwärtsstreckenempfangsleistung (102), ob der Zustand von NodeB "nicht verfügbar" ist, und Zurückweisen der Verbindungsanforderung (110), wenn die Antwort zutreffend ist.

9. Zulassungssteuerungsverfahren nach Anspruch 7, wobei das Verfahren ferner aufweist:

   Bestimmen vor dem Erhalten des vorhergesagten Werts der Aufwärtsstreckenempfangsleistung (103), ob der aktuelle UL-Restkapazitätskredit von NodeB niedriger als der UL-Aufwand ist, der "nicht verfügbar" erforderlich ist, und Zurückweisen der Verbindungsanforderung (110), wenn die Antwort zutreffend ist; und Aktualisieren des UL-Restkapazitätskredits (109), wenn die Verbindungsanforderung zugelassen wird.

10. Zulassungssteuerungsverfahren nach Anspruch 7, wobei der Schritt zum Bestimmen, ob der Verbindungsdienst zugelassen werden soll, aufweist:

    Vergleichen des vorhergesagten Werts der Aufwärtsstreckenempfangsleistung und eines vorbestimmten Schwellwertes (108), Zulassen der Verbindungsanforderung (109), wenn der vorhergesagte Wert der Aufwärtsstreckenempfangsleistung niedriger als der vorbestimmte Schwellwert ist, und andernfalls Zurückweisen der Verbindungsanforderung (110).

11. Zulassungssteuerungsverfahren nach Anspruch 10, wobei die vorbestimmten Schwellenwerte jeweils für jeden Diensttyp festgelegt werden (105, 106), und der Schritt des Bestimmens, ob der Verbindungsdienst zugelassen werden soll, aufweist:

    Vergleichen des vorhergesagten Werts der Aufwärtsstreckenempfangsleistung und eines vorbestimmten Schwellwertes, Zulassen der Verbindungsanforderung (109), wenn der vorhergesagte Wert der Aufwärtsstreckenempfangsleistung niedriger als der vorbestimmte Schwellwert ist, und andernfalls Zurückweisen der Verbindungsanforderung (110).

12. Zulassungssteuerungsverfahren nach Anspruch 10, wobei ein vorbestimmter Schwellwert hoher Priorität und ein vorbestimmter Schwellwert niedriger Priorität für eine Aufschaltverbindung bzw. eine Zugriffsverbindung festgelegt sind (105, 106), und der Schritt zum Bestimmen, ob der Verbindungsdienst zugelassen werden soll, aufweist:

    Bestimmen, ob der vorhergesagte Wert der Aufwärtsstreckenempfangsleistung niedriger als der vorbestimmte Schwellwert hoher Priorität ist, wenn die Verbindungsanforderung eine Aufschaltverbindung ist; Bestimmen, ob der vorhergesagte Wert der Aufwärtsstreckenempfangsleistung niedriger als der vorbestimmte Schwellwert niedriger Priorität ist, wenn die Verbindungsanforderung eine Zugriffsverbindung ist; und Zulassen der Verbindungsanforderung (109), wenn die Antwort zutreffend ist, und andernfalls Zurückweisen der Verbindungsanforderung (110).

13. Zulassungssteuerungsverfahren nach Anspruch 10, wobei die vorbestimmten Schwellwerte jeweils für jeden Diensttyp festgelegt werden, und ein vorbestimmter Schwellwert hoher Priorität und ein vorbestimmter Schwellwert niedriger Priorität jeweils für eine Aufschaltverbindung und eine Zugriffsverbindung in Bezug auf jeden Diensttyp festgelegt werden (105, 106), und der Schritt zum Bestimmen, ob der Verbindungsdienst zugelassen werden soll, aufweist:

    Bestimmen, ob der vorhergesagte Wert der Aufwärtsstreckenempfangsleistung niedriger als der vorbestimmte Schwellwert hoher Priorität ist, entsprechend dem Diensttyp der Verbindungsanforderung, wenn die Verbindungsanforderung eine Aufschaltverbindung ist; Bestimmen, ob der vorhergesagte Wert der Aufwärtsstreckenempfangsleistung niedriger als der vorbestimmte Schwellwert niedriger Priorität ist, entsprechend dem Diensttyp der Verbindungsanforderung, wenn die Verbindungsanforderung eine Zugriffsverbindung ist; und Zulassen der Verbindungsanforderung (109), wenn die Antwort zutreffend ist, und andernfalls Zurückweisen der Verbindungsanforderung (109).

## Revendications

1. Procédé de prédiction pour une puissance reçue de liaison montante dans un système d'accès multiple par répartition en code à large bande avec un accès de service mixte, le procédé de prédiction étant **caractérisé en ce qu'**il comprend les étapes consistant à :

   obtenir une puissance reçue de liaison montante courante et un type de service d'une demande d'appel ; calculer le changement de puissance reçue correspondant à ladite puissance reçue de liaison montante courante et audit type de service de la demande d'appel par un simple calcul discret avec un tableau de pré-configuration, dans lequel ledit tableau de pré-configuration est obtenu en mettant à l'échelle et pré-calculant une courbe caractéristique de changement de puissance non linéaire ; et

calculer la valeur prédite de la puissance reçue de liaison montante en conformité avec ladite puissance reçue de liaison montante courante et ledit changement de puissance reçue.

2. Procédé de prédiction pour une puissance reçue de liaison montante selon la revendication 1, dans lequel la relation entre la puissance reçue de liaison montante mise à l'échelle à la condition d'un seul service et le changement de puissance reçue est enregistrée dans ledit tableau de pré-configuration ;

ladite étape de calcul de la valeur du changement de puissance reçue, comprend les étapes consistant à :

mettre à l'échelle la puissance reçue de liaison montante courante ;
rechercher le changement de puissance reçue à la condition d'un seul service correspondant à la puissance reçue de liaison montante courante dans ledit tableau de pré-configuration ; et
calculer le changement de puissance reçue prédit selon ledit type de service de la demande d'appel.

3. Procédé de prédiction pour une puissance reçue de liaison montante selon la revendication 2, dans lequel l'étape de calcul de la valeur prédite d'une puissance reçue de liaison montante comprend les étapes consistant à :

convertir ladite puissance reçue de liaison montante courante et ledit changement de puissance reçue en une valeur de mise à l'échelle sous un nominal public ; et
calculer la valeur prédite de la puissance reçue de liaison montante par un simple calcul discret en conformité avec un réseau pré-configuré, où ledit réseau pré-configuré est obtenu en mettant à l'échelle et pré-calculant le résultat de l'addition de puissances non-linéaires possibles.

4. Procédé de prédiction pour une puissance reçue de liaison montante selon la revendication 2, dans lequel l'étape de calcul du changement de puissance reçue prédit en se basant sur ledit type de service de la demande d'appel comprend l'étape consistant à :

calculer ledit changement de puissance reçue prédit, en se basant sur ledit changement de puissance reçue à la condition d'un seul service correspondant à la puissance reçue de liaison montante courante et ledit facteur d'estimation de charge correspondant au type de service de la demande d'appel ;
dans lequel, ledit facteur d'estimation de charge est calculé à l'avance en conformité avec l'indice de QS (qualité de service) de chaque type de service et les caractéristiques de l'environnement radio.

5. Procédé de prédiction pour une puissance reçue de liaison montante selon la revendication 4, dans lequel ledit indice de QS du type de service comprend un facteur d'activité vocale, un rapport performance sur bruit et un débit binaire de service, et lesdites caractéristiques d'environnement radio comprennent un facteur d'interférence de cellule adjacente.

6. Procédé de prédiction pour une puissance reçue de liaison montante selon les revendications 1 à 5, dans lequel ledit type de service est un type subdivisé à partir des quatre types de session, flux, interaction et arrière-plan.

7. Procédé de commande d'admission d'appel pour un service mixte de liaison montante d'un système de communication mobile, comprenant les étapes consistant à :

obtenir une valeur prédite de ladite puissance reçue de liaison montante au moyen du procédé de prédiction des revendications 1 à 6 (107) ; et
déterminer si l'on admet ledit service d'appel en se basant sur ladite valeur prédite de la puissance reçue de liaison montante (108).

8. Procédé de commande d'admission selon la revendication 7, dans lequel ledit procédé comprend en outre l'étape consistant à :

déterminer si l'état du NoeudB est « non disponible » avant d'obtenir ladite valeur prédite de la puissance reçue de liaison montante (102), et si la réponse est « vrai », refuser ladite demande d'appel (110).

9. Procédé de commande d'admission selon la revendication 7, dans lequel ledit procédé comprend en outre les étapes consistant à :

déterminer si le crédit de capacité UL résiduel courant du NoeudB est inférieur au coût UL requis « non disponible » avant d'obtenir ladite valeur prédite de la puissance reçue de liaison montante (103), et si la réponse est « vrai », refuser ladite demande d'appel (110) ; et

si ladite demande d'appel est admise, mettre à jour ledit crédit de capacité UL résiduel (109).

10. Procédé de commande d'admission selon la revendication 7, dans lequel l'étape consistant à déterminer si l'on admet ledit service d'appel comprend les sous-étapes consistant à :

comparer ladite valeur prédite de la puissance reçue de liaison montante et un seuil prédéterminé (108), si ladite valeur prédite de la puissance reçue de liaison montante est inférieure audit seuil prédéterminé, admettre ladite demande d'appel (109), sinon refuser ladite demande d'appel (110).

11. Procédé de commande d'admission selon la revendication 10, dans lequel lesdits seuils prédéterminés sont établis pour chaque type de service respectivement (105, 106), et l'étape consistant à déterminer si l'on admet ledit service d'appel comprend les sous-étapes consistant à :

comparer ladite valeur prédite de la puissance reçue de liaison montante et un seuil prédéterminé, si ladite valeur prédite de la puissance reçue de liaison montante est inférieure audit seuil prédéterminé, admettre ladite demande d'appel (109), sinon refuser ladite demande d'appel (110).

12. Procédé de commande d'admission selon la revendication 10, dans lequel un seuil prédéterminé de haute priorité et un seuil prédéterminé de faible priorité sont établis pour un appel d'intervention et un appel d'accès respectivement (105, 106) et ladite étape consistant à déterminer si l'on admet ledit service d'appel comprend les sous-étapes consistant à :

si la demande d'appel est un appel d'intervention, déterminer si ladite valeur prédite de la puissance reçue de liaison montante est inférieure audit seuil prédéterminé de haute priorité, si la demande d'appel est un appel d'accès, déterminer si ladite valeur prédite de la puissance reçue de liaison montante est inférieure audit seuil prédéterminé de faible priorité ; et si la réponse est « vrai », admettre ladite demande d'appel (109), sinon refuser la demande d'appel (110).

13. Procédé de commande d'admission selon la revendication 10, dans lequel lesdits seuils prédéterminés sont établis pour chaque type de service respectivement, et un seuil prédéterminé de haute priorité et un seuil prédéterminé de faible priorité sont respectivement établis pour un appel d'intervention et un appel d'accès concernant chaque type de service (105, 106), ladite étape consistant à déterminer si l'on admet ledit service d'appel comprenant les sous-étapes consistant à :

si la demande d'appel est un appel d'intervention, déterminer si ladite valeur prédite de la puissance reçue de liaison montante est inférieure au seuil prédéterminé de haute priorité correspondant au type de service de la demande d'appel, si la demande d'appel est un appel d'accès, déterminer si ladite valeur prédite de la puissance reçue de liaison montante est inférieure au seuil prédéterminé de faible priorité correspondant au type de service de la demande d'appel ; et si la réponse est « vrai », admettre ladite demande d'appel(109), sinon refuser la demande d'appel (109).

Fig.1

Fig.2

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6278882 B
- CN 97104491
- WO 1173771 A
- EP 1071306 A1
- CN 0200694 W

**Non-patent literature cited in the description**

- A Call Admission Algorithm for Multiple Class Traffic in CDMA Systems. *IEEE VTC Fall 2000,* 24 September 2000, 4.7.1.5
- **HARRI HOLMA.** WCDMA for UMTS. JOHN WILEY & SONS, LTD, 2000
- **KURI J.** Call Admission on the Uplink of a CDMA System based on Total Received Power. *IEEE, US,* 06 June 1999, vol. 3, ISBN 978-0-7803-5285-8, 1431-1436